# EUROPÄISCHE PATENTSCHRIFT

(11) **EP 3 737 474 B1**
(45) Veröffentlichungstag und Bekanntmachung des Hinweises auf die Patenterteilung: **23.03.2022**
(21) Anmeldenummer: 18721703.9
(22) Anmeldetag: 17.04.2018
(51) Int. Cl.: A62B 3/00, B25F 5/00

(54) **VERFAHREN ZUM BETRIEB EINES ARBEITSGERÄTS ODER RETTUNGSGERÄTS, ARBEITSGERÄT ODER RETTUNGSGERÄT**
METHOD FOR OPERATING A WORKING DEVICE OR RESCUE DEVICE, AND WORKING DEVICE OR RESCUE DEVICE
PROCÉDÉ PERMETTANT DE FAIRE FONCTIONNER UN OUTIL DE TRAVAIL OU UN APPAREIL DE SAUVETAGE, OUTIL DE TRAVAIL OU APPAREIL DE SAUVETAGE

(43) Veröffentlichungstag der Anmeldung: 18.11.2020
(73) Patentinhaber: Lukas Hydraulik GmbH, 91058 Erlangen (DE)
(72) Erfinder: SAUERBIER, Carsten, 91207 Lauf (DE); KIRCHNER, Uwe, 91080 Marloffstein (DE)
(74) Vertreter: Stippl Patentanwälte
(86) Internationale Anmeldenummer: PCT/EP2018/059715
(87) Internationale Veröffentlichungsnummer: WO 2019/201424

(56) Entgegenhaltungen:
- WO-A1-2017/190799
- DE-B3-102015 108 833

## Beschreibung

Die Erfindung betrifft ein Verfahren zum Betrieb eines Arbeitsgeräts oder Rettungsgeräts gemäß dem Oberbegriff des Anspruchs 1 sowie ein Arbeitsgerät oder Rettungsgerät gemäß dem Oberbegriff des Anspruchs 12.

### Technologischer Hintergrund

Portable, von einer Bedienungsperson tragbare, motorisch angetriebene Arbeitsgeräte oder Rettungsgeräte der hier interessierenden Art werden bei vielfältigen Anwendungen eingesetzt. So gibt es beispielsweise Schneidgeräte, die von Einsatzkräften (Feuerwehr) dazu verwendet werden, verletzte Personen aus Unfallfahrzeugen zu bergen oder beispielsweise Erdbebenopfer zu befreien. Die Art der Arbeitsgeräte bzw. der Rettungsgeräte ist hierbei vielfältig. Es gibt elektrohydraulisch oder elektromechanisch angetriebene Arbeitsgeräte bzw. Rettungsgeräte mit, vorzugsweise gehärteten, Werkzeugeinsätzen zum Schneiden, Spreizen oder zum Heben. Derartige Geräte werden im Einsatz extremen hohen mechanischen Anforderungen ausgesetzt und sind je nach Einsatzort unterschiedlichsten Umwelteinflüssen (Hitze, Kälte, Feuchtigkeit) unterworfen.

In zunehmendem Maße kommen bedingt durch den technischen Fortschritt im Automobilbau immer härtere Materialien zum Einsatz. Rettungsgeräte müssen daher diesen steigenden Anforderungen entsprechend ausgelegt sein.

Bei Schneidgeräten kann es beim Schneiden von sehr harten Materialien vorkommen, dass die Schneidmesser bzw. Schermesser zwar in das Schnittobjekt (z. B. in eine A oder B-Säule eines Fahrzeugs) eindringen, dann aber trotz der sich weiter aufbauenden Kraft in das Material nicht weiter vordringen. Die sich weiter aufbauende Kraft bzw. der daraus resultierende Druck führt dazu, dass das Schneidgerät beginnt, sich unter der Last allmählich zum Schnittobjekt zu drehen. Dies kann wiederum dazu führen, dass die Schneidmesser bzw. Schermesser mehr und mehr auseinander gespreizt werden und hierdurch Bauteile, wie z. B. der Zentralbolzen, um den die Schneidmesser bzw. Schermesser sich drehen, unter eine steigende Spannung geraten. Schlimmstenfalls kann es unter solchen Bedingungen sogar zu einem Bruch von Bauteilen kommen. Dies wiederum kann zum Absprengen von Bauteilen und daraus resultierend zu Verletzungen der Bedienungsperson führen.

### Druckschriftlicher Stand der Technik

Aus der WO 2017/190799 A1 ist ein Verfahren gemäß dem Oberbegriff des Anspruchs 1 bekannt. Bei diesem Verfahren werden während des Betriebs des Arbeitsgeräts oder Rettungsgeräts eine Vielzahl von Betriebsdaten erfasst und in einen in der elektrischen Energiequelle untergebrachten Datenträger oder Datenspeicher überführt. Die in den Datenträger oder Datenspeicher der elektrischen Energiequelle abgelegten Betriebsdaten werden von einem Ladegerät ausgelesen, an ein Netzwerk weiterübertragen und zentral abgelegt. Zweck dieser Maßnahme ist es vor allem, eine Betriebshistorie bezüglich des Einsatzes jedes Geräts zu generieren und zentral zu dokumentieren. Bei den Betriebsdaten kann es sich um vielfältige Parameter handeln, u.a. um den vom Elektromotor gezogenen Strom oder die Orientierung des Arbeitsgeräts bzw. Rettungsgeräts im Raum. Jedes Arbeitsgerät besitzt eine individuelle ID zur Identifizierung des individuellen Arbeitsgeräts innerhalb der Dokumentation.

### Aufgabe der vorliegenden Erfindung

Die Aufgabe der vorliegenden Erfindung besteht darin, ein gattungsgemäßes Verfahren zur Verfügung zu stellen, welches eine erhöhte Betriebssicherheit gewährleistet. Ferner besteht die Aufgabe darin ein entsprechendes Arbeits- oder Rettungsgerät zur Verfügung zu stellen.

### Lösung der Aufgabe

Die vorstehende Aufgabe wird bei dem gattungsgemäßen Verfahren durch die Merkmale des Anspruchs 1 und bei dem gattungsgemäßen Arbeits- oder Rettungsgerät durch die Merkmale des Anspruchs 12 gelöst.

Zweckmäßige Ausgestaltungen der Erfindung werden in den abhängigen Ansprüchen beansprucht.

Dadurch, dass die Winkelstellung W der Schnittebene E1 des Arbeitsgeräts oder Rettungsgeräts im Raum und die vom Schneidwerkzeug auf das Schnittobjekt aufgebrachte Kraft in Relation zueinander gesetzt werden und das Arbeitsgerät oder Rettungsgerät in Abhängigkeit davon gesteuert wird, kann wirksam vermieden werden, dass es zu einer Beschädigung des Arbeitsgeräts bzw. Rettungsgeräts bzw. Verletzungen der Bedienungsperson bei einem sich zum Schnittobjekt unter Last drehenden Arbeitsgeräts bzw. Rettungsgeräts kommen kann. Unter "Schnittebene E1" ist hierbei diejenige Ebene gemeint, die von der jeweiligen Schneidkante der betreffenden Schneidwerkzeughälfte während deren Verschwenkung gebildet wird. In Anbetracht dessen wird eine im Vergleich zu bisherigen Arbeitsgeräten bzw. Rettungsgeräten erhöhte Betriebssicherheit gewährleistet.

Die auf das Schnittobjekt aufgebrachte Kraft bzw. der daraus resultierende Druck wird erfindungsgemäß durch Feststellung des vom Elektromotor gezogenen Stroms P1 festgestellt bzw. daraus abgeleitet. Je mehr der Elektromotor Strom zieht, desto größer ist sein Antriebsmoment bzw. der über die vom Elektromotor angetriebenen Pumpe aufgebaute Druck bzw. die Kraft.

Zweckmäßigerweise werden die Winkelstellung W und/oder die Kraft P und/oder der Strom P1 und/oder ein daraus gebildeter Parameter mit Sollwerten, einer Soll-Kennlinie und/oder einem Soll-Kennfeld und/oder einem Look-up-table abgeglichen und in Abhängigkeit davon ein Betriebsereignis G ausgelöst. Beispielsweise kann ein Betriebsereignis G ausgelöst werden, wenn die Winkelstellung W eine vorgegebene kritische Winkelabweichung W(krit) erreicht oder überschreitet.

Die Winkelabweichung W(krit) kann zum Beispiel 10 bis 30° bezogen auf eine Ausgangsstellung, vorzugsweise 10 bis 20° betragen.

Ein Betriebsereignis G kann zum Beispiel auch bei einer Kombination der Winkelstellung W und der Kraft P bzw. des Stroms P1 ausgelöst werden. Beispielsweise kann aus einer Kombination (bzw. dem Verhältnis) der vorgenannten Parameter ein neuer Steuerungsparameter erstellt werden.

Bei dem Betriebsereignis G handelt es sich insbesondere um
- die Ausgabe eines Warnhinweises, beispielsweise eines Warntons und/oder eine optischen Warnsignals,
- das Wirksamwerden einer Überlastbegrenzung, indem beispielsweise die Kraft bzw. der Druck nicht weiter erhöht werden kann, z.B. begründet durch eine besondere Motorsteuerung und/oder
- eine anderweitige Steuerungsbeeinflussung des Elektromotors und/oder
- das Abspeichern der Betriebsdaten bezüglich Winkelstellung W, Winkelabweichung W(krit), Kraft P, Strom P1 und/oder der Realzeit T.

Da sich zu Beginn eines Schneidvorgangs, z.B. beim Durchtrennen einer A- oder B-Säule eines Unfallfahrzeugs, das Arbeitsgerät bzw. Rettungsgerät in Bezug auf die Horizontale in einer undefinierten räumlichen Lage befinden kann, erfolgt erfindungsgemäß eine Initialisierung zur Bestimmung der Winkelstellung W der Schnittebene E1 des Arbeitsgeräts oder Rettungsgeräts im Raum vorzunehmen. Diese Initialisierung erfolgt zweckmäßigerweise zu Beginn des Schneidvorgangs, also am Ende der Bewegungsphase der Schneidwerkzeughälften ohne Last, d.h. der Phase, bei der die Schneidwerkzeughälften lediglich auf das Schnittobjekt zu bewegt werden. Am Ende dieser Phase sind die Schneidwerkzeughälften üblicherweise in einem zumindest im Wesentlichen senkrechten Winkel zum Schnittobjekt positioniert.

Mit der Initialisierung wird eine definierte Ausgangswinkelstellung W, zumindest im Wesentlichen, festgelegt, von der ab die Veränderung der Winkelstellung W gemessen wird. Beispielsweise handelt es sich hierbei um eine Winkelstellung W, bei der die Schnittebene in Bezug auf die Längsachse oder die Längserstreckung des Schnittobjekts in einem Winkel von 90° angeordnet ist. Dies muss aber nicht zwingend so sein.

Vorzugsweise wird die Initialisierung dann vorgenommen, wenn eine bestimmte Kraft P bzw. Druck bzw. ein bestimmter vom Elektromotor gezogener Strom P1 erreicht wird. Beispielsweise handelt es sich hierbei um eine Betriebsphase, bei der der Schneidvorgang gerade begonnen hat, d.h. wenn die Kraft P bzw. der Druck bzw. der vom Elektromotor gezogene Strom P1 beginnt anzusteigen oder einen bestimmten Wert erreicht hat.

Zweckmäßigerweise erfolgt das erfindungsgemäße Verfahren in Echtzeit bzw. Realzeit, d.h. unter Ist-Zeit-Bedingung, sodass während des Betriebs sogleich ein steuernder Eingriff erfolgen kann, sofern die Bedingungen für das Betriebsereignis G vorliegen.

Die Erfindung betrifft darüber hinaus ein von einer Bedienperson tragbares, autark einsetzbares elektromagnetisches oder elektrohydraulisches Arbeitsgerät oder Rettungsgerät, welches gemäß einem Verfahren nach mindestens einem der Ansprüche 1 bis 11 betrieben wird.

### Beschreibung der Erfindung anhand von Ausführungsbeispielen

Nachstehend wird eine zweckmäßige Ausgestaltung der vorliegenden Erfindung näher erläutert. Es zeigen:
- Fig. 1: ein Rettungsgerät für den Einsatz in dem erfindungsgemäßen Verfahren in Draufsicht;
- Fig. 2: das Rettungsgerät gemäß Fig. 1 in Seitenansicht;
- Fig. 3: das Rettungsgerät gemäß Fig. 1 in perspektivischer Ansicht zu Beginn des Schneidvorgangs;
- Fig. 4: eine stark vereinfachte Teildarstellung verschiedener Ansichten der Lage des Schnittobjekts zu den Schneidwerkzeughälften des Rettungsgerät gemäß Fig. 1;
- Fig. 5: eine stark vereinfachte Darstellung der Veränderungen verschiedener Parameter über der Zeit sowie
- Fig. 6: eine stark vereinfachte Darstellung der funktionellen Hardwarekomponenten für den Einsatz in dem erfindungsgemäßen Verfahren.

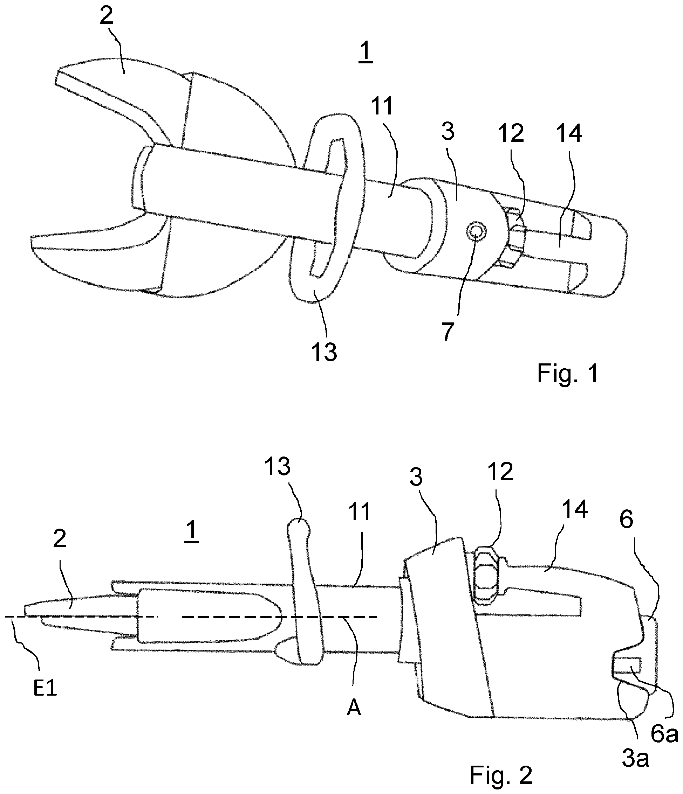

Bezugsziffer 1 in Fig. 1 bezeichnet ein Beispiel eines von einer Bedienperson tragbaren, autark einsetzbaren Arbeitsgeräts oder Rettungsgeräts. Im vorliegenden Fall handelt es sich um einen elektrohydraulischen Schneider oder Cutter, welcher häufig von der Feuerwehr als Rettungsgerät zur Befreiung von in verunfallten Fahrzeugen eingeklemmten Personen verwendet wird. Das Gerät umfasst ein Gehäuse 3 mit Handgriff 14 sowie ein manuell betätigbares Schaltventil 12 in Form eines Sternventils. Bezugsziffer 7 kennzeichnet den am Gehäuse 3 befindlichen Hauptschalter. An das Gehäuse 3 schließt sich ein Zylinder 11 an, an dem ebenfalls ein Traggriff 13 angeordnet ist. An der Vorderseite des Zylinders 11 befindet sich ein Schneidwerkzeug 2 in Form eines Werkzeugeinsatzes bestehend aus zwei Schneidwerkzeughälften 2a, 2b aus gehärtetem Material, die um einen (in Fig. 1 nicht sichtbaren) Bolzen (Zentralbolzen) drehbar gelagert sind. Je nach Betätigung des Schaltventils 12 können die beiden Schneidwerkzeughälften 2a, 2b aufeinander zu oder voneinander weg bewegt werden.

Wie aus Fig. 2 ersichtlich ist, kann als Energiequelle 6 ein Akku mit eigenem Gehäuse vorgesehen sein, der in einen entsprechenden Aufnahmeschacht 3a des Gehäuses 3 einsteckbar sein kann. Zur Fixierung der Energiequelle 6 im Aufnahmeschacht 3a des Gehäuses 3 weist die Energiequelle 6 beidseitig angeordnete Halteklammern 6a auf, die per Fingerdruck betätigbar sind, um die Energiequelle 6 aus dem Aufnahmeschacht 3a herausziehen zu können. Im Inneren des Gehäuses befindet sich ein (in Fig. 1 und 2 nicht dargestellter) Elektromotor, der dazu vorgesehen ist, eine (in Fig. 1 und 2 ebenfalls nicht dargestellte) Hydraulikpumpe anzutreiben. Mit Betätigung des Hauptschalters 7 wird der Elektromotor und damit die Pumpe an- oder abgeschaltet. Mit dem Schaltventil 12 kann das Gerät von der Bedienperson entweder in einem Stand-by-Modus (keine Beaufschlagung des Zylinders 11, die Schneidwerkzeugeinsätze 2a, 2b bewegen sich nicht) oder in einem Schneidmodus (die Werkzeugeinsätze 2a, 2b bewegen sich aufeinander zu) oder in einem Öffnungsmodus (die Werkzeugeinsätze 2a, 2b bewegen sich voneinander weg) betrieben werden. In dem Schneidmodus, bei dem sich die Werkzeugeinsätze 2a, 2b aufeinander zu bewegen, können die Schneidwerkzeugeinsätze 2a, 2b auf das Schnittobjekt entweder zugeführt werden oder das Material geschnitten werden.

Die beiden Schneidwerkzeughälften 2a, 2b definieren über ihre sich berührenden Schnittkanten während ihrer Verschwenkbewegung um den Bolzen eine Schnittebene E1, die in Fig. 2 dargestellt ist. A bezeichnet die Längsachse des Arbeitsgeräts oder Rettungsgeräts 1.

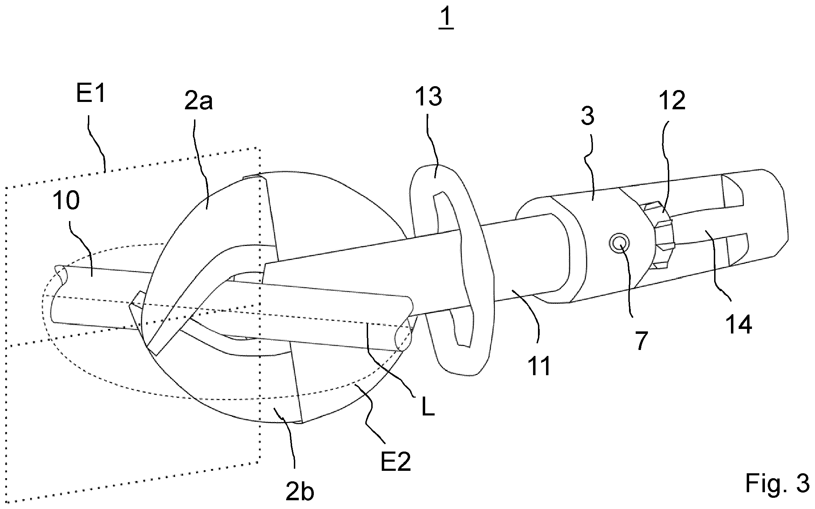

Fig. 3 zeigt das Rettungsgerät 1 sowie ein Schnittobjekt 10 zu Beginn einer Schneidsituation. Die beiden Schneidwerkzeughälften 2a, 2b greifen an dem Schnittobjekt 10 beidseitig an. Die Schnittebene E1 ist in Fig. 3 perspektivisch als gepunktete Ebene angedeutet. Die Schnittebene E1 verläuft hierbei zu Beginn des Schneidvorgangs im Wesentlichen rechtwinklig zur Längsachse L des Schnittobjekts 10 bzw. zu einer Ebene E2, die durch eine (gedachte) Rotation des Schnittobjekts 10 um eine in der Schnittebene E1 positionierte (gedachte) Drehachse D festgelegt wird.

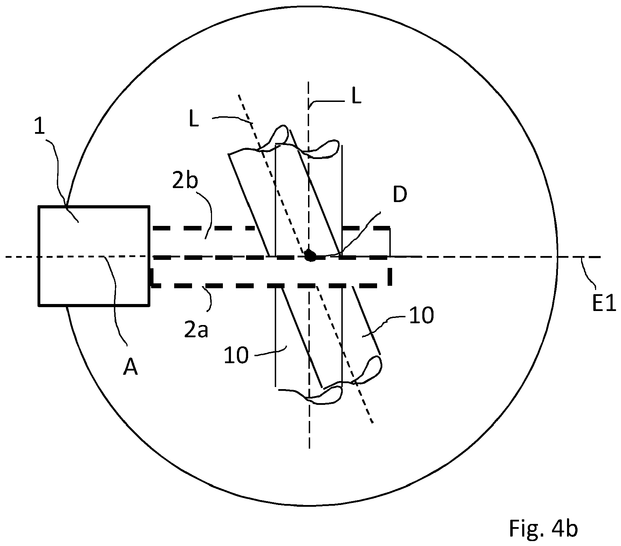

Fig. 4b zeigt diese Situation unter gestrichelter Abbildung der beiden Schneidwerkzeughälften 2a, 2b in stark vereinfachter vergrößerter Teilschnittdarstellung. Sofern das Schnittobjekt 10 um die in der Schnittebene E1 liegende Drehachse D gedreht wird, bleibt die Schnittebene E1 zur Längserstreckung bzw. Längsachse L des Schnittobjekts 10 in einem im Wesentlichen rechten Winkel. A bezeichnet die Längsachse des Arbeitsgeräts oder Rettungsgeräts 1 (vgl. Fig. 2).

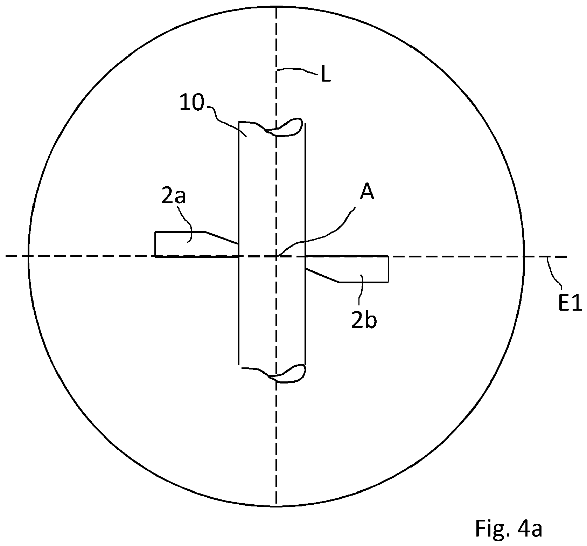

Die Darstellung gemäß Fig. 4a zeigt eine Vorderansicht lediglich der beiden Schneidwerkzeugeinsätze 2a, 2b, die an der Ober- und Unterseite des Schnittobjekts 10 angreifen. Die Darstellung gemäß Fig. 4a ist eine Ansicht in Schnittebene E1.

Die in Fig. 4a dargestellte Situation bildet den Beginn des Schneidvorgangs ab, bei dem sich die beiden Schneidwerkzeughälften 2a, 2b zum Schneidobjekt 10 hin bewegt haben bzw., wie dargestellt, an Letzterem anliegen. In dieser Phase ist die Schnittebene E1 zur Längsachse L des Schnittobjekts 10 üblicherweise zumindest im Wesentlichen in einem 90°-Winkel ausgerichtet. Bei weiterer Betätigung des Schneidwerkzeugs dringen die beiden Schneidwerkzeughälften 2a, 2b in das Material des Schnittobjekts 10 allmählich ein.

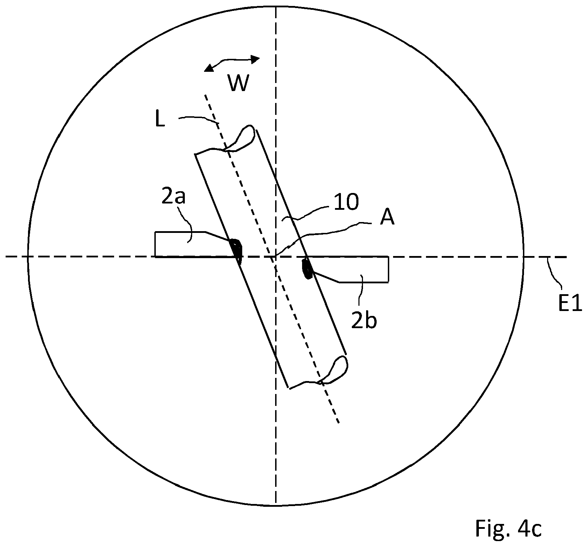

Wie aus Fig. 4c ersichtlich ist, bedingt der zunehmende Druck bzw. die zunehmende Kraft insbesondere bei einem harten Schnittobjekt 10 eine allmähliche Drehung bzw. Verschwenkung des Rettungswerkzeugs 1 um seine Längsachse A und damit seiner Schnittebene E1 relativ zur Längsachse L bzw. zur Ebene E2, vgl. Fig. 3, des Schnittobjekts 10. Die Drehung bzw. Verschwenkung bedingt die Winkelstellung W. Diese allmähliche Drehung oder Verschwenkung führt zu zunehmenden Kraftvektoren, die die beiden Schneidwerkzeugeinsätze 2a, 2b versuchen, gegeneinander aufzuspreizen. Die Winkelstellung W bedeutet hierbei die Winkelstellung der Schnittebene E1 zur Längsorientierung bzw. Längsachse L des Schnittobjekts 10 bzw. der Ebene E2. Diese ist im Ausgangsfall üblicherweise im Wesentlichen 90° zur Schnittebene E1 und verändert sich bei zunehmendem Druck bzw. zunehmender Kraft. Der Ausgangsfall kann aber bei besonderen Schnittobjekt oder besonderen Gegebenheiten auch einen anderen Winkel als 90° betragen.

Zu diesem Zweck erfolgt eine Initialisierung der Winkelstellung W der Schnittebene E1 des Arbeitsgeräts oder Rettungsgeräts 1 im Raum. Ab der Initialisierung wird die sich während des Schneidvorgangs ergebende Veränderung der Winkelstellung W gemessen.

Die Initialisierung erfolgt zweckmäßig an einem Punkt oder/oder während einer Phase, wenn die Kraft einen bestimmten Wert erreicht und/oder aufgrund des beginnenden Schneidvorgangs ansteigt. Besonders vorteilhaft kann zur Initialisierung ein bestimmter Wert des vom Motor gezogenen Stroms P1 oder ein bestimmter Verlauf desselben verwendet werden. Wird z. B. das Arbeitsgeräts oder Rettungsgeräts 1 in Betrieb genommen, die beiden Schneiden an das Schnittobjekt herangeführt und anschließend der Schneidvorgang begonnen, steigt die Kraft bzw. der Druck bzw. der vom Motor gezogenen Stroms P1 an. Beim Erreichen einer vorgegebenen Größe von Kraft bzw. der Druck bzw. vom Motor gezogenen Stroms P1 wird die Initialisierung der Winkelvermessung ausgelöst.

Die zulässige Winkelstellung W wird gemäß der vorliegenden Erfindung lediglich auf einen bestimmten verschwenkten Bereich begrenzt, beispielsweise auf einen Bereich von 10-30°, vorzugsweise von 10 bis 20° Abweichung jeweils zur 90°-Stellung. Das Ende des zulässigen Bereiches definiert eine Winkelabweichung W(krit), bei deren Überschreitung ein Betriebsereignis G ausgelöst werden kann. Bei dem Betriebsereignis G kann es sich um die Ausgabe eines Warnhinweises, das Wirksamwerden einer Überlastbegrenzung, der Steuerungsbeeinflussung des Elektromotors und/oder um das Abspeichern der Betriebsdaten bezüglich Winkelstellung W, Winkelabweichung W(krit), Kraft P, Strom P1 und/oder der Realzeit T handeln.

Die Erfindung ermöglicht es somit, eine Gefahrensituation beim Betrieb von Rettungs- bzw. Arbeitsgeräten gezielt zu detektieren und entsprechende Steuerungsmaßnahmen für den konkreten Fall vorzunehmen.

Die auf das Schnittobjekt 10 durch die beiden Schneidwerkzeugeinsätze 2a, 2b aufgebrachte Kraft bzw. Druck kann vorteilhaft aus dem vom Elektromotor gezogenen Strom P1 abgeleitet werden. Insofern kann aus der Winkelstellung W sowie der Kraft P bzw. des Stroms P1 eine neue Steuervariable geschaffen werden, die es ermöglicht, diese spezielle Betriebssituation wirksam zu erfassen.

Die Winkelstellung W und/oder die Kraft P und/oder ein daraus gebildeter Parameter kann bzw. können mit Sollwerten, einer Soll-Kennlinie und/oder einem Soll-Kennfeld abgeglichen werden. In Abhängigkeit davon kann mindestens ein Betriebsereignis G ausgelöst werden. Bei dem Betriebsereignis G kann es sich beispielsweise um die Ausgabe eines Warnhinweises und/oder das Wirksamwerden eines Überlastbegrenzung und/oder um einen anderweitigen Steuerungseingriff des Elektromotors 4 handeln.

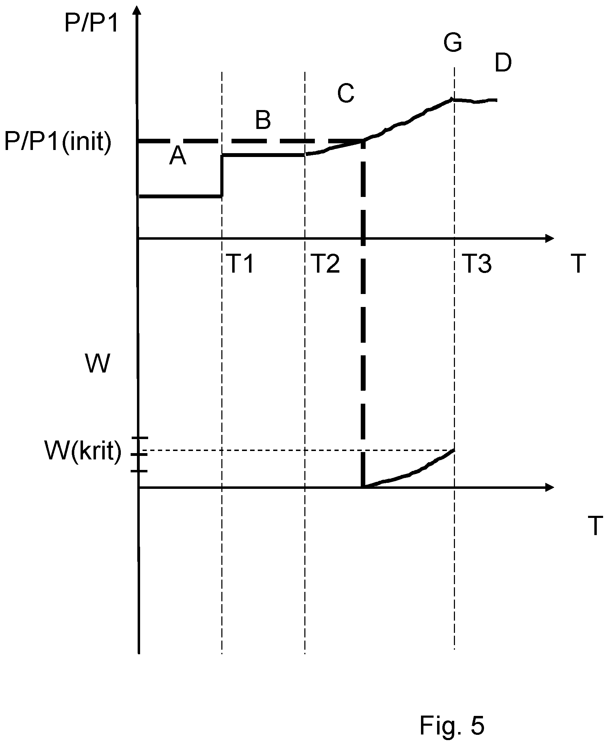

Die grafische Darstellung in Fig. 5 zeigt die Veränderung des vom Elektromotor gezogenen Stroms P1 über die Zeit T. Zunächst wird das Rettungsgerät in Betrieb gesetzt, indem der Hauptschalter 7 betätigt wird. Hierdurch wird der Elektromotor gestartet und befindet sich im Leerlauf (Phase A). Nach einer bestimmten Zeit T1 betätigt die Bedienperson das Schaltventil 12, wodurch Hydraulikflüssigkeit gefördert wird und die beiden Schneidwerkzeughälften 2a, 2b sich auf das Schnittobjekt 10 ohne Last zu bewegen (lastfreie Phase B). Zu einem Zeitpunkt T2 greifen die beiden Schneidwerkzeughälften 2a, 2b an der Außenseite des Schnittobjekts 10 an und dringen allmählich in das Material ein. Ab diesem Punkt bzw. Bereich steigt bedingt durch den Widerstand des Schnittobjekts 10 die Kraft P bzw. der Druck auf das Schnittobjekt 10 an (Phase C). Während der Lastperiode C steigt der vom Elektromotor gezogene Strom kontinuierlich an. Dementsprechend steigt auch die Kraft P bzw. der Druck an.

Eine bestimmte Kraft P(init) (bzw. Druck) bzw. gezogener Strom P1 (init) kann vorteilhaft zur Initialisierung der Messung der Winkelstellung W bzw. deren Veränderung herangezogen werden (gestrichelte Linie in Fig.5). Initialisierung bedeutet, dass die Messung der Winkelstellung W ab diesem Punkt beginnt. Somit kann ab diesem Zeitpunkt sowohl die Kraft (Druck) als auch die Winkelstellung zueinander in Relation gesetzt und für die Steuerung des Betriebs des Arbeitsgeräts oder Rettungsgeräts 1 herangezogen werden. Somit kann vorteilhaft eine selbsttätige Initialisierung der Winkelstellung W erzielt werden.

Bei harten Materialien führt dieser Kraft- bzw. Druckanstieg dazu, dass sich, wie bereits in Fig. 4c dargestellt, die Schnittebene E1 des Rettungsgeräts allmählich zur Längsachse bzw. Längsorientierung L des Schnittobjekts 10 verschwenkt. Diese Verschwenkung ist in der zweiten Darstellung in Fig. 5 wiedergegeben, bei der der Drehwinkel W in Grad über der Zeit angegeben ist. Beim Erreichen der Winkelstellung W(krit) wird mindestens ein Betriebsereignis G selbsttätig ausgelöst. Beispielsweise kann, wie in Fig. 5 dargestellt, von der Steuerung die Kraft (Druck) bzw. der vom Elektromotor gezogene Strom begrenzt werden, so dass trotz des Betriebs keine zusätzlichen mechanischen Belastungen mehr auf die konstruktiven Teile des Arbeitsgeräts oder Rettungsgeräts 1 ergeben können. Ebenso kann ein optischer und/oder akustischer Warnhinweis erfolgen.

Wie aus Fig. 5 ersichtlich ist, können gemäß der Erfindung mittels der Parameter Drehwinkel W sowie Kraft P bzw. Druck bzw. vom Elektromotor gezogener Strom P1 zwei Parameter zueinander in Relation gesetzt werden, um eine unzulässige Verdrehung des Rettungsgeräts 1 zum Schnittobjekt 10 zu erfassen und durch Auslösung eines Betriebsereignisses G zu vermeiden.

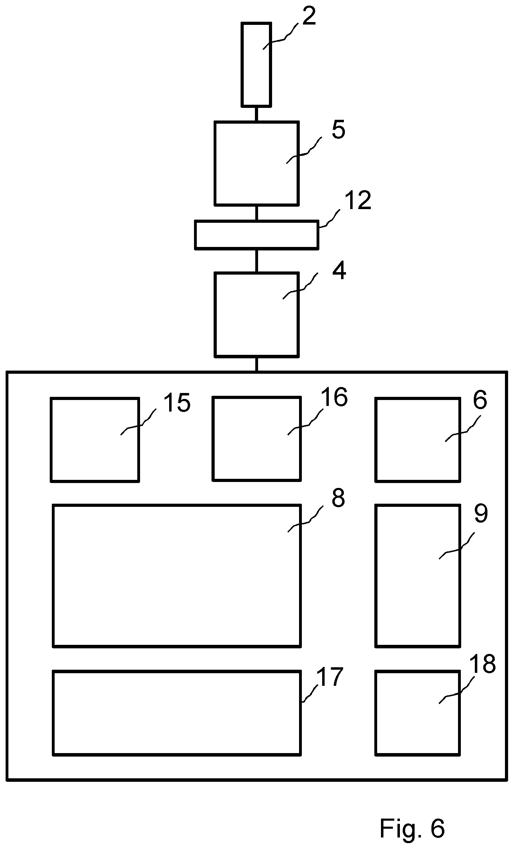

Aus Fig. 6 sind die einzelnen funktionellen Komponenten der erfindungsgemäßen Steuerung zum Betrieb des erfindungsgemäßen Verfahrens ersichtlich. Die Pumpe 5 zur Förderung der Hydraulikflüssigkeit wird von dem Elektromotor 4 angetrieben, der wiederum seine Energie aus der Energiequelle 6, z.B. von einem Akkumulator, bezieht. Bezugsziffer 8 kennzeichnet einen Mikroprozessor, welcher die einzelnen funktionellen Aufgaben der Steuerung leistet und mit einem Lagesensor 15 sowie Stromsensor 16 in Verbindung steht. Des Weiteren ist der Mikroprozessor 8 auch mit einem Display 9, welches am Rettungsgerät oder Arbeitsgerät angeordnet ist, mit einem Speicher 17 sowie mit einem Akustikmodul 18 verbunden. In dem Display 9 kann ein Warnhinweis als Betriebsereignis G ausgegeben werden. Alternativ oder zusätzlich kann in einem Akustikmodul 18 ein akustisches Signal für diesen Fall erzeugt werden. Darüber hinaus können die betreffenden Parameter, wie z.B. die Winkelstellung W, die Kraft P bzw. der Druck und/oder der vom Elektromotor bezogene Strom P1 bzw. eine Kombination darauf in einem Speicher 17 abgelegt werden. Hierdurch kann insbesondere das Betriebsereignis G unter Realzeitbedingungen T dokumentiert werden. Mit dem Mikroprozessor 8 ebenfalls verbunden ist ein Lagesensor 15. Bei diesem Lagesensor 15 kann es sich um einen Drehratensensor oder ein sogenanntes Gyroskop handeln, der eine Bewegung in X-, Y- sowie Z-Richtung sowie eine Drehung um die X-, Y- sowie Z-Richtung ermöglicht. Des Weiteren steht der Mikroprozessor 8 mit einem Sensor 16 in Verbindung, welcher den vom Motor gezogenen Strom P1 erfasst. Die Steuerung kann über Mittel verfügen, die eine zuschaltbare Leistungsbegrenzung des Motors ermöglichen.

Das erfindungsgemäße Verfahren erfolgt vorzugsweise in Echtzeit. Hierdurch wird es möglich, gefährliche Betriebssituationen und dadurch bedingte Schäden zu vermeiden.

### BEZUGSZEICHENLISTE

- 1: Rettungsgerät
- 2: Schneidwerkzeug
- 2a: Schneidwerkzeughälfte
- 2b: Schneidwerkzeughälfte
- 3: Gehäuse
- 3a: Aufnahmeschacht
- 4: Elektromotor
- 5: Pumpe
- 6: Energiequelle
- 6a: Halteklammern
- 7: Hauptschalter
- 8: Mikroprozessor
- 9: Display
- 10: Schnittobjekt
- 11: Zylinder
- 12: Schaltventil
- 13: Traggriff
- 14: Handgriff
- 15: Lagesensor
- 16: Stromsensor
- 17: Speicher
- 18: Akustikmodul

- D: Drehachse
- E1: Schnittebene
- E2: Ebene
- G: Betriebsereignis
- L: Längsachse
- P: Kraft
- P1: Strom
- T: Realzeit
- W: Winkelstellung
- W(krit): Winkelabweichung
- A: Längsachse

## Patentansprüche

1. Verfahren zum Betrieb eines von einer Bedienperson tragbaren, autark einsetzbaren elektromechanischen oder elektrohydraulischen Arbeitsgeräts oder Rettungsgeräts (1), mit
einem Schneidwerkzeug (2) mit zwei Schneidwerkzeughälften (2a, 2b), die zueinander sowie voneinander weg bewegt werden können und durch ihre Bewegung eine virtuelle Schnittebene E1 festlegen,
einem Gehäuse (3),
einem Elektromotor (4),
einer vom Elektromotor (4) angetriebene Pumpe (5) oder einem vom Elektromotor (4) angetriebenen mechanischem Getriebe jeweils zur Betätigung des Werkzeugeinsatzes,
einer Energiequelle, vorzugsweise einer geräteseitig im oder am Arbeitsgerät oder Rettungsgerät (1) untergebrachten, vorzugsweise austauschbaren wieder aufladbaren elektrischen Energiequelle (6),
während des Betriebs des Arbeitsgeräts oder Rettungsgeräts (1) die Orientierung des Arbeitsgeräts oder Rettungsgeräts (1) erfasst wird, wobei die auf das Schnittobjekt (10) aufgebrachte Kraft P als der vom Elektromotor (4) gezogene Strom (P1) über der Zeit T festgestellt wird,
wobei eine Initialisierung der Winkelstellung W der Schnittebene E1 des Arbeitsgeräts oder Rettungsgeräts (1) im Raum erfolgt,
wobei die Winkelstellung W der Schnittebene E1 des Arbeitsgeräts oder Rettungsgeräts (1) im Raum sowie die vom Schneidwerkzeug (2) auf das Schnittobjekt (10) aufgebrachte Kraft in Relation zueinander gesetzt werden und das Arbeitsgerät oder Rettungsgerät (1) in Abhängigkeit davon gesteuert wird und
wobei in Abhängigkeit davon ein Betriebsereignis G ausgelöst wird.

2. Verfahren nach Anspruch 1, **dadurch gekennzeichnet, dass** die Winkelstellung W und/oder die Kraft P und/oder ein daraus gebildeter Parameter mit Sollwerten, einer Soll-Kennlinie und/oder einem Soll-Kennfeld abgeglichen werden und in Abhängigkeit davon ein Betriebsereignis G ausgelöst wird.

3. Verfahren nach Anspruch 1, **dadurch gekennzeichnet, dass** ab der Initialisierung die Veränderung der Winkelstellung W gemessen wird.

4. Verfahren nach mindestens einem der vorhergehenden Ansprüche, **dadurch gekennzeichnet, dass** wenn die Winkelstellung W eine vorgegebene kritische Winkelabweichung W(krit) erreicht ein Betriebsereignis ausgelöst wird.

5. Verfahren nach Anspruch 4, **dadurch gekennzeichnet, dass** die Winkelabweichung W(krit) 10 bis 20°, vorzugsweise 10 bis 30° beträgt.

6. Verfahren nach einem der Ansprüche 4 oder 5, **dadurch gekennzeichnet, dass** es sich bei dem Betriebsereignis G um
die Ausgabe eines Warnhinweises und/oder
das Wirksamwerden eines Überlastbegrenzung und/oder
eine Steuerung des Elektromotors (4) handelt.

7. Verfahren nach einem der Ansprüche 1 bis 6, **dadurch gekennzeichnet, dass**
die Initialisierung an einem Punkt oder/oder während einer Phase erfolgt, wenn die Kraft einen bestimmten Wert erreicht und/oder aufgrund des beginnenden Schneidvorgangs ansteigt.

8. Verfahren nach einem der Ansprüche 1 bis 7, **dadurch gekennzeichnet, dass** zur Initialisierung ein Messwert des vom Motor gezogenen Stroms P1 oder der Verlauf desselben verwendet wird.

9. Verfahren nach mindestens einem der vorhergehenden Ansprüche, **dadurch gekennzeichnet, dass** die Veränderung der Winkelstellung W der Schnittebene E1 des Arbeitsgeräts oder Rettungsgeräts (1) im Raum während des Schneidens festgestellt wird.

10. Verfahren nach mindestens einem der vorhergehenden Ansprüche, **dadurch gekennzeichnet, dass** als Winkelstellung W die Drehstellung und/oder Drehung des Arbeitsgeräts oder Rettungsgeräts (1) um dessen Längsachse oder um eine Parallele dazu erfasst wird.

11. Verfahren nach mindestens einem der vorhergehenden Ansprüche, **dadurch gekennzeichnet, dass** das Verfahren in Echtzeit erfolgt.

12. Von einer Bedienperson tragbares, autark einsetzbares elektromechanisches oder elektrohydraulisches Arbeitsgerät oder Rettungsgerät (1), mit
einem Schneidwerkzeug (2) mit zwei Schneidwerkzeughälften (2a, 2b), die zueinander sowie voneinander weg bewegt werden können und durch ihre Bewegung eine virtuelle Schnittebene E1 festlegen,
einem Gehäuse (3),
einem Elektromotor (4),
einer vom Elektromotor (4) angetriebene Pumpe (5) oder einem vom Elektromotor (4) angetriebenen mechanischem Getriebe jeweils zur Betätigung des Werkzeugeinsatzes,
einer Energiequelle, vorzugsweise geräteseitig im oder am Arbeitsgerät oder Rettungsgerät (1) untergebrachten, vorzugsweise austauschbaren wieder aufladbaren elektrischen Energiequelle (6),
einem Lagesensor (15),
einem Stromsensor (16) sowie
einem Mikroprozessor (8)
wobei während des Betriebs des Arbeitsgeräts oder Rettungsgeräts (1) die Orientierung des Arbeitsgeräts oder Rettungsgeräts (1) erfasst wird, **dadurch gekennzeichnet, dass** der Mikroprozessor (8) derart konfiguriert ist, dass
während des Betriebs des Arbeitsgeräts oder Rettungsgeräts (1) die Orientierung des Arbeitsgeräts oder Rettungsgeräts (1) erfasst wird,
die auf das Schnittobjekt (10) aufgebrachte Kraft P als der vom Elektromotor (4) gezogene Strom (P1) über der Zeit T festgestellt wird,
eine Initialisierung der Winkelstellung W der Schnittebene E1 des Arbeitsgeräts oder Rettungsgeräts (1) im Raum erfolgt,
die Winkelstellung W der Schnittebene E1 des Arbeitsgeräts oder Rettungsgeräts (1) im Raum sowie die vom Schneidwerkzeug (2) auf das Schnittobjekt (10) aufgebrachte Kraft in Relation zueinander gesetzt werden und das Arbeitsgerät oder Rettungsgerät (1) in Abhängigkeit davon gesteuert wird und
in Abhängigkeit davon ein Betriebsereignis G ausgelöst wird.

## Claims

1. Method for operating an electromechanical or electrohydraulic work implement or rescue implement (1) able to be worn or carried by an operator and able to be used autonomously, having
a cutting tool (2) with two cutting tool halves (2a, 2b) that are able to be moved towards one another and away from one another and whose movement defines a virtual cutting plane E1,
a housing (3),
an electric motor (4),
a pump (5) driven by the electric motor (4) or a mechanical transmission driven by the electric motor (4), each for actuating use of the tool,
an energy source, preferably a rechargeable electrical energy source (6) accommodated, on the implement side, in or on the work implement or rescue implement (1) and preferably being able to be exchanged,
during operation of the work implement or rescue implement (1), the orientation of the work implement or rescue implement (1) is recorded,
wherein the force P applied to the cutting object (10) is established as the current (P1) drawn by the electric motor (4) over time T,
wherein the angular position W of the cutting plane E1 of the work implement or rescue implement (1) in space is initialized,
wherein the angular position W of the cutting plane E1 of the work implement or rescue implement (1) in space and the force applied to the cutting object (10) by the cutting tool (2) are correlated with one another and the work implement or rescue implement (1) is controlled on the basis thereof and
wherein an operating event G is triggered on the basis thereof.

2. Method according to Claim 1, **characterized in that** the angular position W and/or the force P and/or a parameter formed therefrom are compared with setpoint values, a setpoint characteristic curve and/or a setpoint characteristic diagram and an operating event G is triggered on the basis thereof.

3. Method according to Claim 1, **characterized in that** the change in the angular position W is measured starting from the initialization.

4. Method according to at least one of the preceding claims, **characterized in that** an operating event is triggered when the angular position W reaches a predefined critical angular deviation W(krit).

5. Method according to Claim 4, **characterized in that** the angular deviation W(krit) is 10 to 20°, preferably 10 to 30°.

6. Method according to either of Claims 4 and 5, **characterized in that** the operating event G involves
a warning notification being output and/or
an overload limit becoming active and/or
the electric motor (4) being controlled.

7. Method according to one of Claims 1 to 6, **characterized in that**
the initialization takes place at a point and/or during a phase when the force reaches a particular value and/or increases due to the cutting process that is beginning.

8. Method according to one of Claims 1 to 7, **characterized in that** a measured value of the current P1 drawn by the motor or the profile thereof is used for initialization.

9. Method according to at least one of the preceding claims, **characterized in that** the change in the angular position W of the cutting plane E1 of the work implement or rescue implement (1) in space is established during the cutting.

10. Method according to at least one of the preceding claims, **characterized in that** the rotational position and/or rotation of the work implement or rescue implement (1) about its longitudinal axis or about a parallel thereto is recorded as angular position W.

11. Method according to at least one of the preceding claims, **characterized in that** the method takes place in real time.

12. Electromechanical or electrohydraulic work implement or rescue implement (1) able to be worn or carried by an operator and able to be used autonomously, having
a cutting tool (2) with two cutting tool halves (2a, 2b) that are able to be moved towards one another and away from one another and whose movement defines a virtual cutting plane E1,
a housing (3),
an electric motor (4),
a pump (5) driven by the electric motor (4) or a mechanical transmission driven by the electric motor (4), each for actuating use of the tool,
an energy source, preferably a rechargeable electrical energy source (6) accommodated, on the implement side, in or on the work implement or rescue implement (1) and preferably being able to be exchanged,
an absolute position sensor (15),
a current sensor (16) and
a microprocessor (8),
wherein, during operation of the work implement or rescue implement (1), the orientation of the work implement or rescue implement (1) is recorded,
**characterized in that** the microprocessor (8) is configured such that
during operation of the work implement or rescue implement (1), the orientation of the work implement or rescue implement (1) is recorded,
the force P applied to the cutting object (10) is established as the current (P1) drawn by the electric motor (4) over time T,
the angular position W of the cutting plane E1 of the work implement or rescue implement (1) in space is initialized,
the angular position W of the cutting plane E1 of the work implement or rescue implement (1) in space and the force applied to the cutting object (10) by the cutting tool (2) are correlated with one another and the work implement or rescue implement (1) is controlled on the basis thereof and
an operating event G is triggered on the basis thereof.

## Revendications

1. Procédé permettant de faire fonctionner un outil de travail ou un appareil de sauvetage (1) électromécanique ou électrohydraulique pouvant être utilisé indépendamment et pouvant être porté par un opérateur, comportant
un outil de coupe (2) comportant deux moitiés d'outil de coupe (2a, 2b) qui peuvent être déplacées l'une vers l'autre et à l'écart l'une de l'autre et définissent un plan de coupe virtuel E1 par leur mouvement,
un boîtier (3),
un moteur électrique (4),
une pompe (5) entraînée par le moteur électrique (4) ou une transmission mécanique entraînée par le moteur électrique (4) respectivement pour l'actionnement de l'insert d'outil,
une source d'énergie, de préférence une source d'énergie électrique (6) placée du côté de l'appareil ou de l'outil dans ou sur l'outil de travail ou l'appareil de sauvetage (1), de préférence échangeable et rechargeable, l'orientation de l'outil de travail ou de l'appareil de sauvetage (1) étant détectée pendant le fonctionnement de l'outil de travail ou de l'appareil de sauvetage (1), la force P appliquée sur l'objet à couper (10) étant définie comme le courant (P1) consommé par le moteur électrique (4) au cours du temps T,
une initialisation de la position angulaire W du plan de coupe E1 de l'outil de travail ou de l'appareil de sauvetage (1) dans l'espace étant effectuée,
la position angulaire W du plan de coupe E1 de l'outil de travail ou de l'appareil de sauvetage (1) dans l'espace et la force appliquée par l'outil de coupe (2) sur l'objet à couper (10) étant mises en relation l'une avec l'autre et l'outil de travail ou l'appareil de sauvetage (1) étant commandé en fonction de ceci et un événement de fonctionnement G étant déclenché en fonction de ceci.

2. Procédé selon la revendication 1, **caractérisé en ce que** la position angulaire W et/ou la force P et/ou un paramètre formé à partir de celles-ci est/sont comaparé(e) (s) à des valeurs de consigne, à une ligne caractéristique de consigne et/ou à un champ caractéristique de consigne et un événement de fonctionnement G est déclenché en fonction de ceci.

3. Procédé selon la revendication 1, **caractérisé en ce que** la variation de la position angulaire W est mesurée à partir de l'initialisation.

4. Procédé selon au moins l'une des revendications précédentes, **caractérisé en ce qu'**un événement de fonctionnement est déclenché lorsque la position angulaire W atteint un écart angulaire W(krit) critique prédéfini.

5. Procédé selon la revendication 4, **caractérisé en ce que** l'écart angulaire W(krit) vaut de 10 à 20°, de préférence de 10 à 30°.

6. Procédé selon l'une des revendications 4 ou 5, **caractérisé en ce que** l'événement de fonctionnement G est la délivrance d'un avertissement et/ou
l'entrée en vigueur d'une limite de surcharge et/ou une commande du moteur électrique (4).

7. Procédé selon l'une des revendications 1 à 6, **caractérisé en ce que**
l'initialisation est effectuée à un point et/ou pendant une phase lorsque la force atteint une valeur déterminée et/ou augmente du fait de l'opération de coupe commençant.

8. Procédé selon l'une des revendications 1 à 7, **caractérisé en ce qu'**une valeur de mesure du courant P1 consommé par le moteur ou son allure est utilisée pour l'initialisation.

9. Procédé selon au moins l'une des revendications précédentes, **caractérisé en ce que** la variation de la position angulaire W du plan de coupe E1 de l'outil de travail ou de l'appareil de sauvetage (1) dans l'espace est déterminée pendant la coupe.

10. Procédé selon au moins l'une des revendications précédentes, **caractérisé en ce que** la position de rotation et/ou la rotation de l'outil de travail ou de l'appareil de sauvetage (1) autour de son axe longitudinal ou autour d'une parallèle à celui-ci est/sont détectée(s) comme position angulaire W.

11. Procédé selon au moins l'une des revendications précédentes, **caractérisé en ce que** le procédé est effectué en temps réel.

12. Outil de travail ou appareil de sauvetage (1) électromécanique ou électrohydraulique pouvant être utilisé indépendamment et pouvant être porté par un opérateur, comportant
un outil de coupe (2) comportant deux moitiés d'outil de coupe (2a, 2b) qui peuvent être déplacées l'une vers l'autre et à l'écart l'une de l'autre et définissent un plan de coupe virtuel E1 par leur mouvement,
un boîtier (3),
un moteur électrique (4),
une pompe (5) entraînée par le moteur électrique (4) ou une transmission mécanique entraînée par le moteur électrique (4) respectivement pour l'actionnement de l'insert d'outil,
une source d'énergie, de préférence une source d'énergie électrique (6) placée du côté de l'appareil ou de l'outil dans ou sur l'outil de travail ou l'appareil de sauvetage (1), de préférence échangeable et rechargeable,
un capteur de position (15),
un capteur de courant (16) et
un microprocesseur (8),
l'orientation de l'outil de travail ou de l'appareil de sauvetage (1) étant détectée pendant le fonctionnement de l'outil de travail ou de l'appareil de sauvetage (1), **caractérisé en ce que** le microprocesseur (8) est configuré de telle sorte que
l'orientation de l'outil de travail ou de l'appareil de sauvetage (1) est détectée pendant le fonctionnement de l'outil de travail ou de l'appareil de sauvetage (1),
la force P appliquée sur l'objet à couper (10) est définie comme le courant (P1) consommé par le moteur électrique (4) au cours du temps T,
une initialisation de la position angulaire W du plan de coupe E1 de l'outil de travail ou de l'appareil de sauvetage (1) dans l'espace est effectuée,
la position angulaire W du plan de coupe E1 de l'outil de travail ou de l'appareil de sauvetage (1) dans l'espace et la force appliquée par l'outil de coupe (2) sur l'objet à couper (10) sont mises en relation l'une avec l'autre et l'outil de travail ou l'appareil de sauvetage (1) est commandé en fonction de ceci et
un événement de fonctionnement G est déclenché en fonction de ceci.
